Europäisches Patentamt

**European Patent Office**

**Office européen des brevets**

(19)

(11) Numéro de publication: **0 202 171**

**A1**

(12) # DEMANDE DE BREVET EUROPEEN

(21) Numéro de dépôt: **86420089.4**

(22) Date de dépôt: **27.03.86**

(51) Int. Cl.⁴: **C 08 L 83/04**
//(C08L83/04, C08K5:10, 5:54)

(30) Priorité: **29.03.85 FR 8504760**

(43) Date de publication de la demande:
**20.11.86 Bulletin 86/47**

(84) Etats contractants désignés:
**AT BE CH DE FR GB IT LI LU NL SE**

(71) Demandeur: **RHONE-POULENC SPECIALITES CHIMIQUES**
**"Les Miroirs" 18, Avenue d'Alsace**
**F-92400 Courbevoie(FR)**

(72) Inventeur: **Chizat, François**
**27, rue Alexis Carrel**
**F-69500 Bron(FR)**

(72) Inventeur: **Chaussabel, Bernard**
**40, rue Pierre Dupont**
**F-69001 Lyon(FR)**

(74) Mandataire: **Seugnet, Jean Louis et al,**
**RHONE-POULENC INTERSERVICES Service Brevets**
**Chimie Centre de Recherches de Saint-Fons B.P. 62**
**F-69192 Saint-Fons Cédex(FR)**

(54) **Additif ester et diester organique pour prévenir la cristallisation du méthyltriacétoxysilane dans les compositions organopolysiloxaniques monocomposantes.**

(57) Composition organopolysiloxanique monocomposante stable au stockage en l'absence d'eau, durcissant en élastomère dès la température ambiante en présence d'eau, caractérisée en ce qu'elle comporte :

A/ au moins un polymère α-ω dihydroxydiorganopolysiloxanique.

B/ un agent réticulant.

C/ une quantité efficace d'au moins un additif pour prévenir la cristallisation de B/ choisi parmi:

les diesters de l'acide orthophtalique et de monoalcools
les esters de l'acide acétique et de monoalcools.

Utilisation de la composition selon l'invention pour réaliser notamment des revêtements et des joints en silicone.

ADDITIF ESTER ET DIESTER ORGANIQUE POUR PREVENIR LA CRISTALLISATION

DU METHYLTRIACETOXYSILANE DANS LES COMPOSITIONS

ORGANOPOLYSILOXANIQUES MONOCOMPOSANTES.

La présente invention a pour objet des compositions organopolysiloxaniques monocomposantes préparées à partir d'huiles diorganopolysiloxaniques hydroxylées, de réticulants acides comprenant le méthyltriacétoxysilane et ses mélanges avec l'éthyltriacétoxysilane, et éventuellement de charges ; elles renferment obligatoirement des additifs destinés à freiner ou même supprimer l'aptitude à la cristallisation des réticulants acides.

L'utilisation de moyens appropriés pour empêcher la cristallisation du méthyltriacétoxysilane, à la température ambiante, ou à des températures plus basses, est connue, elle figure en particulier dans le brevet français 2.235.981, le brevet américain 4.116.935, le brevet français 2.451.931 et la demande allemande 3.143.705.

Le brevet français 2.235.981 enseigne l'emploi d'un additif choisi dans le groupe comprenant le dioxanne, l'acrylonitrile, l'acétonitrile, le trichloroéthylène, la butanesultone, l'acétate de butyle et le tétrachlorure de carbone pour obtenir une action fongicide et parallèlement abaisser le point de solidification du méthyltriacétoxysilane. Les produits cités sont cependant ou bien toxiques, ou bien volatils (ainsi la moitié de ces produits ont un point éclair de l'ordre de 40°C ou inférieur à cette valeur) ; il en résulte que, déjà, au stade de la fabrication des compositions il sera nécessaire d'employer un appareillage sophistiqué donc coûteux pour éviter tout accident sérieux ; par ailleurs au stade de l'utilisation des compositions, il sera indispensable d'opérer en milieu bien aéré et ventilé, et en outre lorsque l'additif incorporé est toxique, d'éviter certains domaines d'applications, par exemple ceux concernant le contact avec les aliments ou les produits pharmaceutiques.

Le brevet américain 4.116.985 enseigne l'emploi d'un mélange de méthyltriacétoxysilane et de diméthyl-1,3 tétraacétoxydisiloxane renfermant au moins 20 % et au plus 80 % de l'un des deux composants. Ce mélange ne semble pas cristalliser à basse température et il conduit à des compositions s'extrudant aisément.

Cependant la fabrication de ce mélange est contraignante, elle exige en effet, plusieurs étapes de chauffage et un barbotage de gaz inerte ; à l'échelle industrielle, on obtient généralement un produit coloré qui ne peut être utilisé pour la fabrication d'élastomères silicones transparents.

Le brevet français 2.451.931 décrit la réaction du méthyltriacétoxysilane ou de l'éthyltriacétoxysilane avec du tertiobutanol et une solution aqueuse d'acide acétique ; les exemples 1 et 2 montrent que les produits obtenus ne cristallisent pas à -10°C. Ces produits sont des mélanges complexes qui présentent l'inconvénient d'être difficilement reproductibles ; par ailleurs ils ont tendance à former des gels, ce qui conduit à des compositions de structure non homogène en couches minces.

La demande allemande 3.143.705. enseigne l'utilisation de l'acide formique pour abaisser la température de cristallisation du méthyltriacétoxysilane ; cet additif serait plus performant que l'acide acétique ou le dioxanne. Toutefois il est bien connu que l'acide formique ne peut être utilisé qu'avec beaucoup de précautions par suite de son caractère corrosif vis-à-vis de nombreuses substances et de son action urticante sur la peau ; les compositions le renfermant ne pourront donc être employées que dans des domaines d'applications assez limités.

La présente invention se propose de pallier les inconvénients précités,, par l'introduction d'additifs nouveaux dans des compositions silicones auto-vulcanisables à réticulants acides ; plus précisément elle se rapporte à une composition organopolysiloxanique monocomposante, stable au stockage en l'absence d'eau, durcissant en élastomères dès la température ambiante en présence d'eau, caractérisée en ce qu'elle comporte

A/ au moins un polymère α-ω dihydroxydiorganopolysiloxanique.

B/ un agent réticulant qui est le méthyltriacetoxysilane.

C/ une quantité efficace d'au moins un additif pour prévenir la cristallisation de B/, miscible en toutes proportions avec B/ et liquide à la température ambiante, choisi parmi :

- les diesters de l'acide orthophtalique et de monoalcools de formule GOH, G étant un radical hydrocarboné de 4 à 12 atomes de carbone

- les esters de l'acide acétique et de monoalcools de formule G'OH, G' étant un radical hydrocarboné de 6 à 18 atomes de carbone.

Le polymère A présente généralement une viscosité de 700 à 1.000.000 mPa.s à 25°C et est généralement constitué d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogène, des groupes cyano.

De préférence le polymère A/ est essentiellement constitué de motif $(CH_3)_2SiO$ et ayant au plus 10% en moles de motifs de formule $CH_3(CH_2=CH)SiO$ et/ou $(C_6H_5)_2SiO$.

Selon un mode de réalisation particulier jusqu'à 80% en poids de B/ peut être remplacé par de l'éthyltriacétoxysilane.

Selon un mode préféré la composition selon l'invention comporte pour 100 parties de A/, 2 à 25 parties de B/ et 5 à 35% en poids de C/ par rapport au poids de B.

De plus les compositions selon l'invention peuvent comporter en outre une quantité catalytiquement efficace d'un catalyseur de durcissement D/ suivant une quantité pouvant aller jusqu'à 5 parties de D/ pour 100 parties de A/ et/ou jusqu'à 250 parties de charge E/ pour 100 parties de polymère A/.

Les compositions selon l'invention sont caractérisées essentiellement par l'incorporation, au cours de leur préparation, d'un constituant supplémentaire C/ de préférence dans la proportion 5 à 35% en poids par rapport à l'agent réticulant B/.

·L'additif C/ est nécessairement un composé liquide à la température ambiante, miscible en toutes proportions avec l'agent réticulant B/.

Comme précédemment indiqué, le polymère α-ω dihydroxydiorganopolysiloxanique A/, qui est un composé essentiel pour la préparation des compositions conformes à l'invention, présente une viscosité de 700 à 1 000 000 mPa.s à 25°C, de préférence 1000 à 700 000 mPa.s à 25°C ; il est formé d'une succession de motifs diorganosiloxy de formule précitée $R_2SiO$ et bloqué à chaque extrémité de sa chaîne par un groupe hydroxyle ; ce polysiloxane peut également comporter des motifs monoorganosiloxy de formule $RSiO_{1,5}$ et/ou de motifs siloxy de formule $SiO_2$, dans la proportion d'au plus 2 % par rapport au nombre total de motifs diorganosiloxy.

Les radicaux hydrocarbonés, substitué ou non par des atomes d'halogènes ou des groupes cyano, représentés par les symboles R, peuvent être choisis parmi :

. Les radicaux alkyle et halogénoalkyle ayant de 1 à 8 atomes de carbone tels que les radicaux méthyle, éthyle, n-propyle, iso-propyle, n-butyle, n-pentyle, n-hexyle, éthyl-2 hexyle, n-octyle, trifluoro-3,3,3 propyle, trifluoro-4,4,4 butyle, pentafluoro-4,4,4,3,3 butyle.

. Les radicaux cycloalkyle et halogénocycloalkyle ayant de 4 à 8 atomes de carbone tels que les radicaux cyclopentyle, cyclohexyle, méthylcyclohexyle, difluoro-2-3 cyclobutyle, difluoro-3,4 méthyl-5 cycloheptyle.

. les radicaux alcényle ayant de 2 à 4 atomes de carbone tels que les radicaux vinyle, allyle, butène-2 yle.

. les radicaux aryle et halogénoaryle ayant de 6 à 8 atomes de carbone tels que les radicaux phényle, tolyle, xylyle, chlorophényle, dichlorophényle, trichlorophényle.

. Les radicaux cyanoalkyle dont les chaînons alkyle ont de 2 à 3 atomes de carbone tels que les radicaux $\beta$-cyanoéthyle et $\gamma$-cyanopropyle.

A titre d'exemples concrets de motifs représentés par la formule $R_2SiO$, on peut citer ceux de formules :
$(CH_3)_2SiO$, $CH_3(CH_2 = CH)SiO$, $CH_3(C_6H_5)SiO$, $(C_6H_5)_2SiO$, $CF_3CH_2CH_2(CH_3)SiO$, $NC-CH_2CH_2(CH_3)SiO$, $NC-CH(CH_3)CH_2(CH_2=CH)SiO$, $NC-CH_2CH_2CH_2(C_6H_5)SiO$.

Il doit être compris, selon une variante de l'invention, que l'on peut utiliser comme polymères A/ un mélange constitué de polymères $\alpha$-$\beta$ dihydroxydiorganopolysiloxaniques qui diffèrent entre eux par le poids moléculaire et ou la nature des groupements liés aux atomes de silicium.

Ces polymères $\alpha$-$\omega$ dihydroxydiorganopolysiloxaniques A/ sont commercialisés ; en outre ils peuvent être aisément fabriqués. L'une des techniques de fabrications les plus courantes consiste, dans une première phase, à polymériser des diorganocyclopolysiloxanes à l'aide de quantités catalytiques d'agents alcalins ou acides puis à traiter les polymérisats avec des quantités calculées d'eau (brevets français 1.134.005, 1.198.749, 1.226.745) ; cet apport d'eau, qui est y d'autant plus élevé que les polymères à réparer ont une viscosité plus faible, peut être remplacé en totalité ou en partie par des huiles $\alpha-\omega$ dihydroxydiorganopolysiloxaniques de faible viscosité, par exemple allant de 5 à 200 mPa.s à 25°C, ayant un taux élevé de radicaux hydroxyles par exemple de 3 à 14 %. Dans une deuxième phase les polymères sont isolés en éliminant, à une température en général supérieure à 100°C et sous une pression, de préférence inférieure à la pression atmosphérique les diorganocyclopolysiloxanes équilibrant la réaction ainsi que les autres polymères de poids moléculaire peu élevé, formés lors de cette réaction. il est recommandé, avant de distiller les produits volatils, de neutraliser les agents alcalins ou acides utilisés comme catalyseurs de polymérisation.

Les polymères A/ préférés sont les $\alpha-\omega$ dihydroxydiméthylpolysiloxanes qui sont donc constitués essentiellement de motifs de formule $(CH_3)_2SiO$ ; toutefois, ils peuvent renfermer au plus 10 % en moles de motifs de formule $CH_3(CH_2=CH))SiO$ et/ou $(C_6H_5)_2SiO$.

L'agent réticulant B/ est généralement employé à raison de 2 à 25 parties, de préférence 3 à 20 parties pour 100 parties du polymère $\alpha-\beta$ dihydroxydiorganopolysiloxanique A/. Il comporte, comme déjà indiqué, de 20 à 100 % en poids, de préférence 30 à 100 %, de méthyltriacétoxysilane de formule $CH_3Si(OCOCH_3)_3$ et 80 à 0 %, de préférence 70 à 0 %, d'éthyltriacétoxysilane de formule $C_2H_5Si(OCOCH_3)_3$. Ces deux composés sont bien connus en tant qu'agents réticulants de compositions autovulcanisables à froid. Ils peuvent renfermer cependant une faible quantité, par exemple 1 à 5 % en poids,de produits de condensation, tels que ceux de formules $(CH_3COO)_2CH_3SiOSiCH_3(OCOCH_3)_2$ et $(CH_3COO)_2C_2H_5SiOSiC_2H_5(OCOCH_3)_2$.

A ces agents réticulants B/ peuvent être associés des silanes F/ portant seulement 2 radicaux hydrolysables, et répondant à la formule générale :

$$R'_2Si(OCOCH_3)_2$$

6

Les symboles R', identiques ou différents, représentent des radicaux méthyle, éthyle, vinyle, phényle, tertiobutoxy.

A titre d'exemples concrets de ces silanes F/ peuvent être cités ceux de formules :

$(CH_3)_2Si(OCOCH_3)_2$, $CH_3(C_2H_5)Si(OCOCH_3)_2$, $(C_2H_5)_2Si(OCOCH_3)_2$, $CH_2=CH(CH_3)Si(OCOCH_3)_2$, $[(CH_3)_3CO]_2Si(OCOCH_3)_2$.

La quantité molaire utilisable des silanes F/ de formules $R'_2Si(OCOCH_3)_2$ n'est pas quelconque ; il est nécessaire, en effet, que le mélange formé de ces silanes F/ et des agents réticulants B/ renferme en moyenne au moins 2,5 groupes hydrolysables pour 1 atome de silicium, appartenant à F/ ou à B/..

Le catalyseur de durcissement D/ est utilisé suivant une quantité catalytiquement efficace généralement à raison d'au plus 5 parties, de préférence d'au plus 4,5 parties, pour 100 parties de polymères α-ω dihydroxydiorganopolysiloxaniques A/. Il est habituellement choisi dans le groupe constitué :

- des sels métalliques d'acides carboxyliques, de préférence des sels d'organoétains d'acides carboxyliques tels que le diacétate et le dilaurate de dibytylétain.

- des produits de réaction des sels d'organoétains d'acides carboxyliques avec les esters titaniques (brevet américain 3.409.753).

- des dérivés organiques du titane et du zirconium tels que les esters titaniques et zirconiques (brevets français 2.531.095, 2.539.422, 2.539.423).

Les charges E/ sont utilisées à raison d'au plus 250 parties, de préférence d'au plus 200 parties, pour 100 parties du polymère α-ω dihydroxydiorganopolysiloxanique A/. Elles peuvent être choisies dans le groupe constitué des charges minérales qui se présentent sous la forme de particules finement divisées, de diamètre particulaire moyen inférieur à 0,1 µm. Parmi ces charges figurent les silices de combustion, les silices de précipitation et les aérogels de silice. Leur surface spécifique est généralement supérieure à 40 $m^2/g$, et se situe le plus souvent dans l'intervalle 150-200 $m^2/g$.

Les charges minérales peuvent également se présenter sous la forme de produits plus grossièrement divisés, de diamètre moyen supérieur à 0,1 µm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum ; leur surface spécifique est généralement inférieure à 30 $m^2$/g.

En dehors des charges minérales peuvent être employées

- des charges métalliques telles que la poudre de fer, de cuivre, d'aluminium, de plomb.

- des charges organiques à base par exemple de liège, de polytétrafluoroéthylène, de polyéthylène, de polypropylène, de polyimide, de polycarbonate.

- des charges diverses à base de noir de carbone, de fibres de verre.

Les charges E/ sont utilisées telles quelles ou après modification par traitement avec des composés organosiliciques. Ces dernières comprennent habituellement les organochlorosilanes, les diorganocyclopolysiloxanes, les hexaorganodisiloxanes, les hexaorganodisilazanes ou les diorganocyclopoysilazanes (brevets français 1.126.884, 1.136.885, 1.236.505, brevet anglais 1.024.234). Les charges traitées renferment, dans la plupart des cas, de 3 à 30 % de leur poids de composés organosiliciques.

Les charges E/ peuvent être consitutées d'un mélange de plusieurs types de charges de granulométrie différente ; ainsi par exemple, elles peuvent être constituées de 30 à 70 % de silices finement divisées de surface spécifique supérieure à 50 $m^2$/g et de 70 à 30 % de silices plus grossièrement divisées de surface spécifique inférieure à 40 $m^2$/g.

Outre les charges E/, d'autres composés peuvent être introduits au cours de la préparation des compositions conformes à l'invention, par exemple des stabilisants thermiques ; ces produits qui, par leur présence, améliorent la résistance thermique des élastomères silicones, comprennent notamment les sels, oxydes et hydroxydes de terres rares (tels que les oxydes et hydroxydes cériques) et les oxydes de titane et de fer et plus spécialement ceux préparés par combustion. Ils peuvent être utilisés à raison de 0,1 à 15 parties et de préférence de 0,15 à 12 parties pour 100 parties du polymères $\alpha$–$\omega$ dihydroxydiorganopolysiloxanique A/.

D'autres composés peuvent encore être introduits, par exemple, des additifs améliorant la résistance à la flamme ; ils sont habituellement choisis dans le groupe constitué des dérivés organiques du phosphore, des composés organiques halogénés, et des dérivés organiques ou minéraux du platine.

Le constituant C/ qui caractérise l'invention est généralement utilisé dans une proportion représentant 5 à 35 % en poids, de préférence 7 à 32 %, par rapport à l'agent réticulant B/.

Il est destiné à abaisser le point de cristallisation de l'agent réticulant B/ ou plus précisément à lui conférer une mauvaise aptitude à la cristallisation. Il doit cependant posséder d'autres qualités en particulier ne pas avoir d'incidences notables et néfastes sur les caractéristiques physiques et chimiques des compositions conformes à l'invention et des élastomères en découlant. Il doit également être peu agressif vis-à-vis de l'environnement, et peu ·volatil à cause des dangers d'inflammabilité. Ces conditions sont respectées en choisissant le constituant C/ dans le groupe comprenant les diesters de l'acide orthophtalique et des monoalcools de formule GOH dans laquelle G est un radical·hydrocarboné de 4 à 12 atomes de carbone. Plus spécifiquement G peut être :

    - un radical alkyle, tel que le radical n-butyle, isobutyle, n-hexyle, éthyl-2 hexyle, n-octyle, n-octyle, n-décyle, n-dodécyle.

    - un radical cycloaliphatique substitué ou non(par un radical alkyle) tel que le radical cyclopentyle, méthylcyclopentyle, cyclohexyle, méthylcyclohexyle.

    - un radical phénylalkyle tel que le radical benzyle, phényl-2 éthyle, phényl-1 éthyle, phényl-3 propyle.

A titre d'exemples concrets de ces diesters, peuvent être cités, le phtalate de butyle et de benzyle, le phtalate de butyle et de décyle, le phtalate de butyle et de cyclohexyle.

Le constituant C/ peut également être choisi dans le groupe des esters de l'acide acétique et des monoalcools de formule G'OH dans laquelle G' est un radical hydrocarboné de 6 à 18 atomes de carbone.

Plus spécifiquement G' peut être :

- un radical alkyle tel que le radical n-hexyle, éthyl-2 hexyle, n-octyle, n-décyle, n-dodécyle, tridécyle, n-pentadécyle, n-octadécyle.

- un radical cycloaliphatique substitué ou non (par un radical alkyle) tel que le radical cyclohexyle, cycloheptyle, méthylcyclohexyle, éthylcyclohexyle, n-propylcyclohexyle, n-butylcyclohexyle, tertiobutylcyclohexyle.

- un radical phénylalcoyle tel que le radical benzyle, phényl-1 éthyle, phényl-2 éthyle, phényl-3 propyle.

A titre d'exemples concrets de ces esters peuvent être cités l'acétate de benzyle, l'acétate de phényl-2 éthyle, l'acétate de paratertiobutylcyclohexyle.

Ces divers composés organiques sont des produits liquides, miscibles en toutes proportions avec l'agent réticulant B/, inertes vis-à-vis des divers constituants et additifs entrant dans la préparation des compositions conformes à l'invention. Ils ont, en outre, un point d'ébullition à la pression atmosphérique supérieur à 150°C, de préférence supérieur à 180°C et un point éclair supérieur à 80°C de préférence supérieur à 100°C.

Pour fabriquer les compositions conformes à l'invention, il est recommandé d'utiliser un appareillage qui permettent de malaxer intimement à l'abri de l'humidité avec et sans apport de chaleur, les constituants A/, B/, C/, D/ et E/ et les autres adjuvants éventuels.

Tous ces ingrédients peuvent être chargés dans l'appareillage selon un ordre quelconque d'introduction. Ainsi, il est possible de mélanger tout d'abord les huiles $\alpha$-$\omega$ dihydroxydiorganopolysiloxaniques A/, et les charges E/ et d'ajouter ensuite à l'empâtage obtenu les agents réticulants B/, les additifs C/ et les catalyseurs D/ ; les agents B/ et les additifs C/ peuvent, dans ce processus, être ajoutés séparément ou sous la forme de leurs mélanges.

Il est également possible de mélanger les huiles A/, les réticulants B/ (préalablement mélangés ou non avec les additifs C/) et d'ajouter ultérieurement aux produits de réaction de ces 2 constituants, les charges E/ et les catalyseurs D/ ; les additifs C/ sont ajoutés en même temps que E/ et D/ dans la mesure où ils n'ont pas été totalement introduits dès le début de l'opération

Au cours de ce processus, les mélanges peuvent être chauffés à une température comprise par exemple dans l'intervalle 50° à 180°C, sous la pression atmosphérique ou sous une pression réduite dans le dessein d'éliminer les matières volatiles telles que l'eau, les polymères de faibles masses moléculaires, l'acide acétique ; dans le cas d'un chauffage supérieur à 90°C, il est préférable d'introduire les additifs C/ après la fin de la période de chauffage.

Les compositions conformes à l'invention sont stables au stockage en l'absence d'eau et durcissent dès la température ambiante en présence d'eau pour former des élastomères.

Après le dépôt des compositions sur les substrats solides, en atmosphère humide, on constate que leur durcissement en élastomères, s'effectue de l'extérieur à l'intérieur de la masse déposée. Il se forme d'abord en surface une peau puis la réticulation se poursuit en profondeur. La formation complète de la peau, qui se traduit par un toucher non collant de la surface, demande une période de temps pouvant être comprise dans l'intervalle allant de 1 minute à 50 minutes ; cette période dépend du taux d'humidité relative de l'atmosphère entourant les compositions et de la faculté de réticulation de celles-ci.

Par ailleurs, le durcissement en profondeur des couches déposées qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Cette période de temps plus longue peut se situer entre 10 minutes et 15 heures.

Les compositions peuvent adhérer, une fois durcies, en élastomères à n'importe quel substrat sans le dépôt préalable d'un agent d'ancrage ; plus précisément l'adhérence est plus particulièrement efficace sur des substrats en verre ou des substrats d'une nature quelconque recouverts de couches de peintures.

Néanmoins si les substrats recouverts des élastomères sont soumis à des contraintes thermiques, mécaniques ou autres, mais importantes, il est recommandé d'appliquer un agent d'ancrage (ou primaire) qui est le plus souvent constitué d'une solution de composés organosiliciques et/ou titaniques (brevets français 1.199.509 et 2.208.255).

Les compositions peuvent être employées pour de multiples applications comme le jointoiement dans l'industrie du bâtiment, l'assemblage des matériaux les plus divers (métaux, matières plastiques, caoutchoucs natures et synthétiques, bois, carton, faïence, brique, céramique, verre, pierre, béton, éléments de maçonnerie), l'isolation de conducteurs électriques, l'enrobage de circuits électroniques, la préparation de moules minces servant à la fabrication d'objets en résines ou mousses synthétiques.

L'intérêt de la présence des additifs C/ est d'obtenir des compositions restant homogènes, donc sans grains ou cristaux ou agglomérats de cristaux, sur une plage de températures allant de la température ambiante à des températures avoisinant - 40°C. Elles se travaillent facilement et en particulier s'étalent correctement sur des substrats les plus divers allant par exemple de la céramique à des tissus en fibres de verre ; de plus, elles conduisent à des élastomères dont les surfaces ont un aspect lisse et uniforme. Il est bien évident que la présence de grains ou de cristaux, est très gênante dans des revêtements, ou des joints, en élastomères transparents ou même dans des revêtements non transparents mais de faible épaisseur.

Les exemples suivants illustrent l'invention :

Exemple 1

On évalue l'aptitude à la cristallisation de divers réticulants au moyen de l'analyse calorimétrique différentielle. L'appareil utilisé est le système METTLER TA 3000 équipé d'une cellule DSC 30. Le refroidissement programmé (2°C par minute) permet de descendre de la température ambiante à -100°C. Chaque échantillon des réticulants à tester (environ 8 à 10 microlitres) est placé dans un creuset en aluminium qui est ensuite fermé d'une façon étanche par emboutissage ; un autre creuset identique mais sans échantillon, est utilisé comme élément de référence. On mesure d'une part la température du début et de la fin du pic exothermique correspondant à la phase de cristallisation et d'autre part l'intensité de ce pic exothermique.

Les résultats sont rassemblés dans le tableau ci-après. Dans ce tableau figure en outre la nature des réticulants mis en oeuvre ; le méthyltriacétoxysilane qui constitue une fraction ou la totalité des réticulants est un liquide à l'état de surfusion, son point de fusion étant de l'ordre de 42°C.

| | Pic exothermique | | |
|---|---|---|---|
| Nature du réticulant | T° début | T° fin | Intensité en milliwatt |
| Méthyltriacétoxysilane seul | - 20°C | - 30°C | 15 |
| Méthyltriacétoxysilane en mélange avec 20 % de son poids d'acétate de benzyle | | Pas de Pic | |
| Méthyltriacétoxysilane en mélange avec 20 % de son poids d'acétate de paratertiobutylcyclohexyle | - 42°C | - 55°C | 0,2 |
| Méthyltriacétoxysilane en mélange avec 20 % de son poids de phtalate de butyle et de benzyle | | Pas de Pic | |

On constate à la lecture du tableau que le méthyltriacétoxysilane surfondu présente dans la plage -20°C, -30°C, un très net pic exothermique, ce qui indique une bonne aptitude à la cristallisation.

L'addition de 20 % en poids, par rapport au méthyltriacétoxysilane, d'acétate de benzyle ou de phtalate de butyle et de benzyle repousse le pic exothermique au-delà de -100°C. L'addition de 20 % en poids, toujours par rapport au méthyltriacétoxysilane, de l'acétate de tertiobutylcyclohexyle semble un peu moins efficace mais l'intensité du pic exothermmique est très faible ce qui indique une mauvaise aptitude à la cristallisation.

Exemple 2

On introduit dans un malaxeur :

- 100 parties d'une huile $\alpha-\omega$ dihydroxydiméthylpolysiloxanique de viscosité 80 000 mPa.s à 25°C,

- 16 parties d'une huile méthylpolysiloxanique de viscosité 60 mPa.s à 25°C, ayant 0,9 % de radicaux hydroxyles liés aux atomes de silicium, constitués de motifs $(CH_3)_3SiO_{0,5}$, $(CH_3)_2SiO$ et $CH_3SiO_{1,5}$ dont le rapport molaire $(CH_3)_3SiO_{0,5}/(CH_3)_2SiO$ est 0,04 et le rapport molaire $CH_3SiO_{1,5}/(CH_3)_2SiO$ est 0,4,

- 14 parties d'une silice de combustion de surface spécifique 200 $m^2/g$ traitée par l'octaméthylcyclotétrasiloxane.

L'ensemble est malaxé à 150°C pendant 2 heures, à l'abri de l'air ambiant, sous atmosphère d'azote anhydre.

Lorsque le mélange homogène ainsi formé s'est suffisamment refroidi et a atteint environ 50°C, on lui ajoute 6 parties de méthyltriacétoxysilane et 0,003 partie de titanate de butyle ; l'ensemble est ensuite malaxé pendant 1 heure. La composition auto-durcissable obtenue $C_1$ est placée dans des récipients étanches à l'air ambiant.

On fabrique deux autres compositions en opérant exactement selon le processus ci-dessus sauf que (1) - pour l'une, appelée $C_2$, les 6 parties du méthyltriacétoxysilane sont remplacées par 7,2 parties d'un mélange liquide homogène constitué de 6 parties de méthyltriacétoxysilane et 1,2 partie de phtalate de butyle et de benzyle,

(2) — pour l'autre, appelée $C_3$, les 6 parties du méthyltriacétoysilane sont remplacées par 7,5 parties d'un mélange liquide homogène constitué de 6 parties de méthyltriacétoxysilane et 1,5 partie d'acétate de benzyle.

Les compositions $C_2$ et $C_3$ sont également placées dans des récipients étanches à l'air ambiant.

Les divers récipients contenant les compositions $C_1$, $C_2$ et $C_3$ sont stockés à 0°C pendant 2 mois puis à −25°C pendant 2 autres mois et finalement à la température ambiante pendnant 8 jours. Au bout de cette période de temps, les récipients sont ouverts et on constate :

— que la compositions $C_1$ renferme une multitude de cristaux dispersés ou agglomérés en mélange avec des grains blanchâtres

— que les compostions $C_2$ et $C_3$ ne renferment ni cristaux ni grains.

<u>REVENDICATIONS</u>

1. Composition organopolysiloxanique monocomposante stable au stockage en l'absence d'eau, durcissant en élastomère dès la température ambiante en présence d'eau, caractérisée en ce qu'elle comporte

A/ au moins un polymère $\alpha-\omega$ dihydroxydiorganopolysiloxanique.

B/ un agent réticulant qui est la méthyltriacetoxysilane.

C/ une quantité efficace d'au moins un additif pour prévenir la cristallisation de B/ miscible en toutes proportions avec B/ et liquide à la température ambiante, choisi parmi:

- les diesters de l'acide orthophtalique et de monoalcools de formule GOH, G étant un radical hydrocarboné de 4 à 12 atomes de carbone
- les esters de l'acide acétique et de monoalcools de formule G'OH, G' étant un radical hydrocarboné de 6 à 18 atomes de carbone.

2. Composition selon la revendication 1, caractérisée en ce que le constituant C/ est choisi parmi le phtalate de butyle et de benzyle, le phtalate de butyle et de decyle, le phtalate de butyle et de cyclohexyle, l'acétate de benzyle, l'acétate de phényl-2 éthyle et l'acétate de paratertiobutylcyclohexyle.

3. Composition selon la revendication 1 ou 2, caractérisée en ce que le polymère A/ présente une viscosité de 700 à 1.000.000 mPa.s à 25°C et est constitué d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogène, des groupes cyano.

4. Composition selon la revendication 3, caractérisée en ce que le polymère A/ est essentiellement constitué de motif $(CH_3)_2SiO$ et ayant au plus 10% en moles de motifs de formule $CH_3(CH_2=CH)SiO$ et/ou $(C_6H_5)_2SiO$.

5. Composition selon l'une quelconque des revendications précédentes, caractérisée en ce que jusqu'à 80% en poids de B/ sont remplacés par de l'éthyltriacetoxysilane.

6. Composition selon l'une quelconque des revendications précédentes, caractérisée en ce qu'elle comporte :

- −100 parties de polymères A/
- −2 à 25 parties de l'agent réticulant B/ et
- −5 à 35% en poids de C/ par rapport au poids de l'agent réticulant B.

7. Composition selon l'une quelconque des revendications précédentes, caractérisée en ce que la composition comporte en outre une quantité catalytiquement efficace d'un catalyseur de durcissement D/.

8. Composition selon l'une quelconque des revendications précédentes caractérisée en ce qu'elle comporte en outre jusqu'à 250 parties de charge E/ pour 100 parties de polymère A/.

9. Composition selon l'une quelconque des revendications précédentes caractérisée en ce que la composition comporte en outre, associé à B/, un silane F/ de formule

$$R'_2 Si(OCOCH_3)_2$$

dans laquelle le symbole R' identique ou différent représente un radical choisi parmi les radicaux méthyle, éthyle, vinyle, phényle, tertiobutoxy, suivant une quantité telle que l'association de F/ et B/ renferme en moyenne au moins 2,5 groupes hydrolysables pour un atome de silicium appartenant à F/ ou à B/.

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| D,Y | FR-A-2 235 981  (BAYER) <br> * Revendications 1,3,4,6,8; page 3, lignes 14-20 * <br> --- | 1 | C 08 L  83/04 // <br> (C 08 L  83/04 <br> C 08 K    5:10 <br> C 08 K    5:54 ) |
| Y | FR-A-1 198 749  (RHONE-POULENC) <br> * Résumé 1b; page 2, colonne de gauche, paragraphe 3; page 2, exemple 2 * <br> --- | 1 | |
| Y | GB-A-2 041 955  (KRAFFT SA) <br> * Revendications 1-3; page 2, lignes 50-57 * <br> --- | 1 | |
| A,D | DE-A-3 143 705  (BAYER) <br> * Revendications 1,2; page 3, lignes 3-16; page 4, lignes 11-16 * <br> --- | 1 | |
| A | US-A-3 240 731  (S. NITZSCHE) <br> * Revendication 1 * <br> --- | 1 | **DOMAINES TECHNIQUES RECHERCHES (Int. Cl.4)** <br><br> C 08 L <br> C 08 K |
| A | US-A-2 938 007  (R.M. SAVAGE) <br> * Revendication 1 * <br><br> ----- | 1 | |

Le présent rapport de recherche a été établi pour toutes les revendications

| Lieu de la recherche | Date d'achèvement de la recherche | Examinateur |
|---|---|---|
| LA HAYE | 04-08-1986 | DEPIJPER R.D.C. |